# EUROPEAN PATENT SPECIFICATION

(11) **EP 0 547 265 B1**
(45) Date of publication and mention of the grant of the patent: **29.11.1995**
(21) Application number: 91121792.5
(22) Date of filing: 19.12.1991
(51) Int. Cl.: B62M 27/02

(54) **Snow cart**
Schneefahrzeug
Véhicule pouvant se déplacer sur neige

(43) Date of publication of application: 23.06.1993
(73) Proprietor: JACSTRON CORPORATION, Hyogo (JP)
(72) Inventor: Sekinobu, Masaaki, Itami-shi, Hyogo (JP)
(74) Representative: Füchsle, Klaus, Dipl.-Ing.

(56) References cited:
- FR-A- 1 594 529
- US-A- 3 509 955

## Description

### Background of the Invention and Related Art Statement

The present invention relates to a snow cart according to the precharacterized part of claim 1.

Conventionally, this kind of cart was proposed, for example, in the Japanese Laid-open Patent Publications Sho. 57-15074 and Sho. 55-136677.

In the former prior art, endless traction belts were installed in the front part and rear part of the main body of the cart, and while rotating and driving the both belts, the front belt is steered by the handle during travel on the snow. In the latter, the belt is installed in the rear part of the main body of the cart, and a ski-shaped rudder is installed in the front part, and while rotating and driving the belt, the ski-shaped rudder is steered by the handle during travel on the snow.

Such conventional snow carts are large and heavy and expensive and generally used for transporting heavy objects or for high speed travel, and they have been mostly used in patrolling or amusement of ski fields. Since the load applied on the main body of the cart is supported only by the belts, the belts may sink into the snow in the case of deep and soft snow, so that the cart cannot travel. To avoid this, the body length must be extended to increase the ground (snow) contacting area of the belt, so that it was impossible to reduce the size.

Also in small snow carts such as snow mobiles, since the load applied to the cart main body is supported by the belt, similar defects were present. And the steering rudder, handle and their coupling mechanism are undetachably attached to the front part of the main body of the cart, so that the cart length becomes long, and it was impossible, for example, to put into the trunk compartment of a passenger car.

Furthermore, all conventional snow carts were designed to be driven by the driver. For example, after climbing to the top of the snow-clad mountain by the snow cart, if the driver slides down the slope on skis, it was necessary to return the snow cart left over on the top of the mountain, that is, the driver must climb up the mountain again to return it, or drive another snow cart to recover by towing the first cart. Thus, it was troublesome to recover the snow cart.

A prior art snow cart is known from US-A 3,509,955. The ski holding means of this known cart are formed by plates which are fastened by springs to mounting bars provided at the sides of the main body and which are fastened to the ski bindings. Other L-shaped plates are similarly fastened to the mounting bars of the main body by springs and are fastened to the skis at the rear part of the ski bindings. The skis are thus substantially rigidly fixed to the main body. They are particularly not displaceably in a vertical direction and are also not tiltably in longitudinal and lateral directions relative to the main body.

Another snow cart is known from FR-A-1 594 529. This known snow cart comprises stirrup-like plates on which the skis are positioned and which are mounted to the main body by a lever means which allows that the skis are conveyed in a condition to lift the skis over the main body. This mechanism does not allow to position the skis in individual contact with snow-covered ground so that it is impossible to transmit the wait of the main body and of the rider to the ground by way of the skis other than of the belts. Furthermore the skis positioned on the stirrup-like plates can not be variably tilted.

### Summary of the Invention

It is an object of the present invention to provide a snow cart as indicated in the precharacterizing part of claim 1, which is small, lightweight and inexpensive and which can be steered by the rider steering the skis attached to the snow cart by motion of his feet.

This object is achieved by a snow cart according to the precharacterizing part of claim 1 wherein the ski holding means is adapted to hold the ski displaceably in a vertical direction relative to the main body and tiltably in longitudinal and lateral directions relative to the main body so that a person riding on the main body can drive the snow cart stayably over snow while steering the skis by motion his feet.

It is a second object of the invention to provide a snow cart that can be driven by radio remote control.

### Brief Description of the Drawings

Fig. 1 is a perspective view of a snow cart in an embodiment of the invention.

Fig. 2 is a partially cutaway side view of the same,

Fig. 3 is a partially cut-away front view of the same.

Fig. 4 is a cross sectional view of essential part of the same.

Fig. 5 is a partially cut-away side view of essential parts of the same.

Fig. 6 is a horizontal sectional view of essential parts of the same.

Fig. 7 is a cross sectional view of essential parts showing other embodiment of the invention.

Fig. 8 is an explanatory drawing showing an example of method of use.

Fig. 9 is a perspective view of a snow cart in a different embodiment of the invention.

Fig. 10 is a partially cut-away side view of the same.

Fig. 11 is a plan view of the same.

Fig. 12 is a partially cut-away front view of the same.

Fig. 13 is a front view of a remote control device for remote-controlling the cart.

Fig. 14 is a cross sectional view of a control device used in the cart.

Fig. 15 is a longitudinal sectional view of the same.

Fig. 16 is a horizontal sectional view of the same.

Fig. 17 is a schematic longitudinal sectional view of a brake device used in the same cart.

Fig. 18 is a schematic longitudinal sectional view of an accelerator used in the same cart.

Fig. 19 is a block diagram for explaining the principle of operation by remote control of the same cart.

Fig. 20 is an explanatory diagram for showing in the procedure of traveling on the snow by the same cart and returning the main body of the same cart.

### Detailed Description of Preferred Embodiments of the Invention

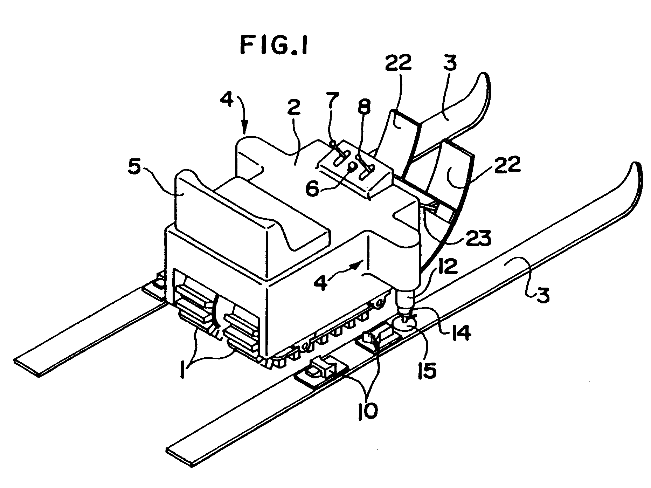

Fig. 1 to Fig. 3 relate to a snow cart in an embodiment of the invention, in which a cart main body 2 possesses snow traveling endless traction belts 1, a pair of skis 3, 3 steered by a driver (a skier) riding aboard the cart main body 2 are disposed at both sides of the cart main body 2, and the skis 3 are attached to ski fixture 4, 4 located at both sides of the cart main body 2.

The cart main body 2 is driven on the snow at a desired speed (for example, a low speed of 4 km/hour) by the belts 1 operated by a prime mover (not shown), and a seat 5 for the driver is disposed in the upper rear part, while a starter switch 6, an accelerator lever 7 and a clutch lever 8 for the prime mover are installed at the upper front part. As the prime mover, for example, a commercial gasoline engine of a maximum shaft torque of 0.38 kgm and a weight of 8.5 kg may be used, and it may be reduced by gears. Or an electric motor may be used.

The skis 3 are longer than the cart main body 2 in the traveling direction (for example, about 1.8 m), and commercial Alpine skis or Nordic skis may be used, and straps 10 for fastening the ski boots of the driver are provided nearly in the middle part thereof.

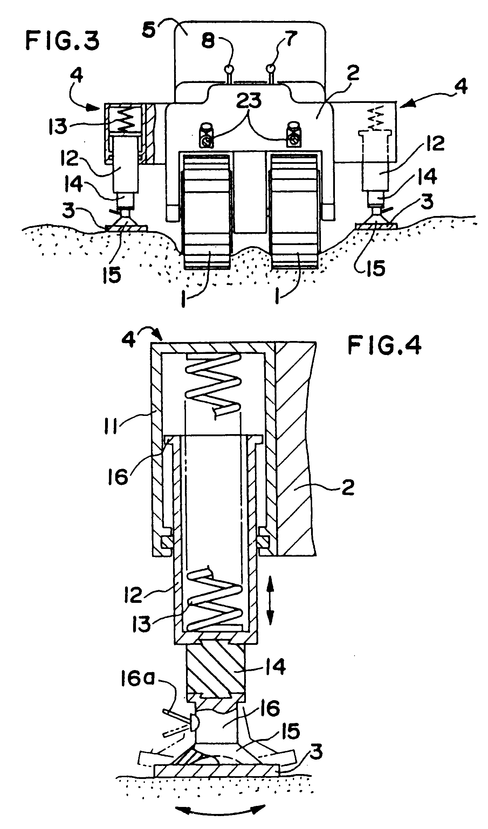

In the ski fixture 4 are as shown in Fig. 4, lift rods 12 are telescopically inserted into cylinders 11 affixed at both sides of the cart main body 2, and the lift rods 12 are always thrust downward by springs 13 loaded in the cylinders 11, while suckers 15 for sucking the upper surface of the skis 3 are disposed at the lower surface of the lift rods through flexible joints 14, and locking protrusions 16 are projecting from the upper ends of the lift rods 12. In order that the skis 3 may not sink into the skin in the case of a steep slope of 10 or more degrees or a deep snow, it is desired to slightly incline the ski fixture 4 so that the skis 3 can incline about 10 degrees upward in the forward direction.

In this constitution, when the driver rides on the cart main body 2, the springs are properly compressed by the load of the cart main body and the body weight of the driver, and the load applied to the cart main body is supported also by the skis 3 in addition to the belts 1, so that the ground (snow) contact area of the belts 1 can be reduced and the cart main body 2 can be downsized. Besides, even in a deep snow or soft snow, the cart main body 2 does not sink excessively into the snow, and travels smoothly. While the cart travels, the skis 3 can securely follow up the changes of the snow surface by the repulsive force of the compressed springs 13, so that the snow encroaching amount of the belts 1 may be decreased.

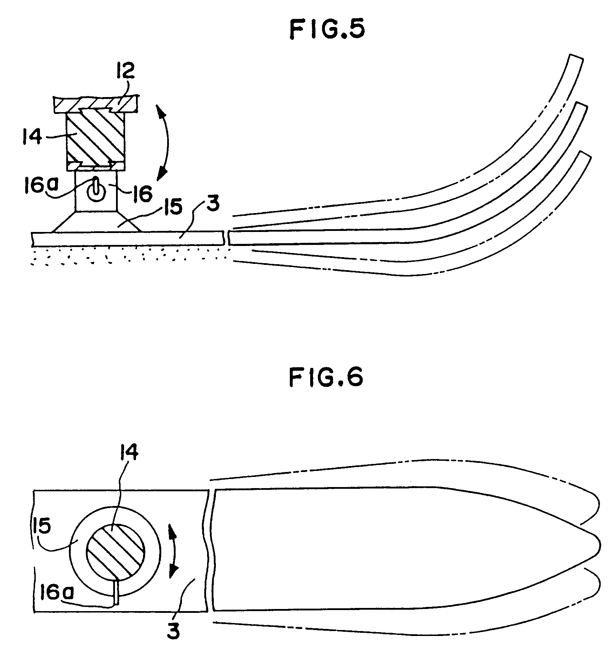

Moreover, since the skis 3 are tiltably supported by the flexible joints 14, the skis 3 can be freely tilted in the lateral direction as indicated by virtual line in Fig. 4, or be freely tilted in the longitudinal direction as indicated by virtual line in Fig. 5, or turned in the horizontal direction as indicated by virtual line in Fig. 6, and thus the skis 3 can be freely steered by the feet of the driver depending on the slope state of the snow surface.

As the flexible joints 14, ball joints or other couplings may be used, but it is desired to use elastic materials such as rubber as shown in the drawings. Accordingly, the inclined skis 3 may be promptly returned to the neutral position by the tensile reaction characteristic of the elastic material.

The suckers 15 are provided with known manual suction devices 16. When the levers 16a of the suction devices 16 are pulled up after abutting the upper surface of the skis 3 to the suckers 15, the inside of the suckers 15 is set in a reduced pressure, and the suckers 15 attract and hold the skis 3 (at the solid line state in Fig. 4). Reversely pulling down the levers 16a release the suckers 15, so that the skis 3 may be easily detached.

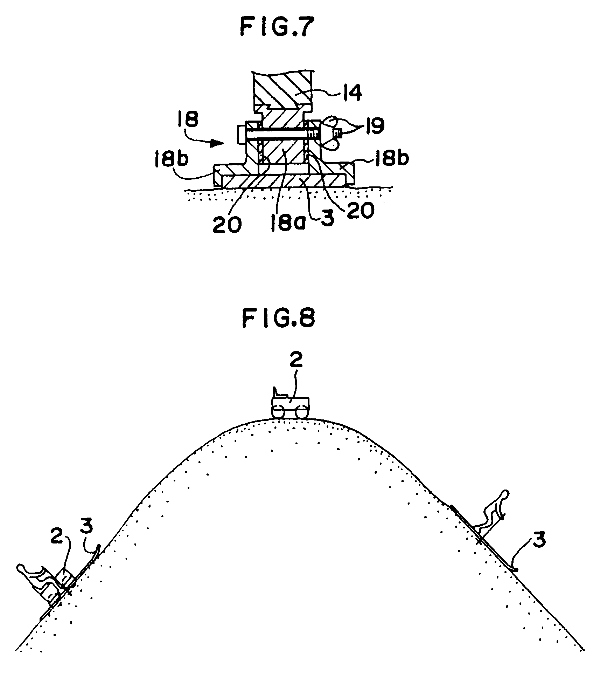

Instead of the suckers 15, a set of mounting brackets 18 as shown in Fig. 7 may be used, which comprises a bracket block 18a affixed to the lower surface of the flexible joint 14 and a pair of ski holding pieces 18b, 18b disposed at both sides of the bracket block 18a, wherein the ski 3 is held from both sides by integrally coupling both holding pieces 18b, 18b with bolt and nut 19. Numeral 20 is a spacer made of rubber or the like.

In Fig. 1 to Fig. 3, numeral 22 shows arc-shaped snow pressing boards disposed in front of the belts 1 and provided with support levers 23, 23 projecting from the middle of the inside, wherein the free ends of the support levers are inserted into engaging holes 24 formed at the front side of the cart main body 2, and are attached to the front part of the cart main body 2 by fixing bolts 25 press-fitted to the support levers 23. The boards are intended to press down the snow during the cart's travel so that the belts 1 may not rotate idly. Meanwhile, when the skis 3 and the cart main body 2 are conveyed in a detached condition, the snow pressing boards 22 are also detached from the cart main body. Hence it is easier to carry.

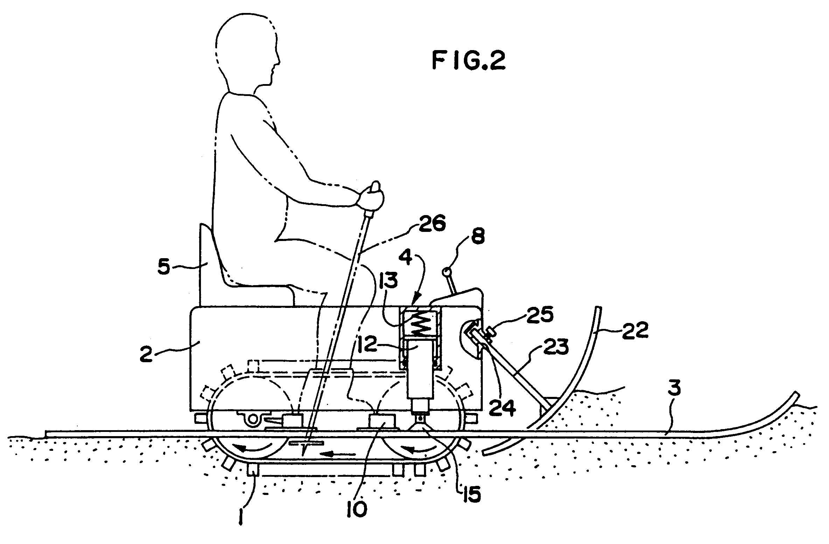

Explaining the operating method of the snow cart, as shown in Fig. 2, the driver wearing the skis 3 on feet sits on the seat 5, and attaches the skis 3 to the ski fixture 4, then manipulates the starter switch 6 to rotate and drive the belts 1. Then the cart begins to slide on the snow, and while the driver freely steer the skis 3 by feet owing to the flexible joints 14, the cart is driven to run on a flat snow surface or climb and descent a steep slope of about 30 degrees, regardless of whether the snow is deep, powdery, wet, granular or iced.

Thus, the driver can freely steer by feet, and may also manipulate sticks 26 if necessary as shown in Fig. 2. These eliminate the need for the steering rudder, handle and the mechanism for coupling them installed in the conventional snowmobile type cart, and the size and weight may be reduced for those parts, for example, the length of the cart main body 2 may be set at 70 cm, the width at 40 cm, and the height from the top of the cart main body 2 to the lower surface of the belts 1 at about 50 cm, and the weight may be set at about 20 to 30 kg. Therefore, it can be sufficiently put into a trunk compartment of a general passenger car.

Moreover, for example as shown in Fig. 8, after climbing a snow-clad mountain by the snow cart, the skis 3 may be detached from the cart main body 2, and the driver can descend on the skis 3 alone. In this case, the cart main body 2 left over on the top of the mountain may be recovered by a larger snow cart, or may be returned by remote control by furnishing the cart main body 2 with a radio controller of four or five channels. Or, the cart main body 2 is small and lightweight, so that the driver can descend by carrying it on the back.

Explaining the results of practical experiments, in which the cart main body 2 of 70 cm in length, 40 cm in width and 50 cm in height was provided, as the prime mover to be mounted, with a commercial gasoline engine of the maximum shaft torque of 0.38 kgm, and a driver weighing 70 kg rode on the snow cart with the total weight of 30 kg steered 1.8 m long skis 3 attached thereto, the following results were obtained.
1. Within a snow slope angle range of 0 to 30 degrees, the cart could be driven stably along the slope direction at a speed of 4 km/hour regardless of whether the snow was deep, powdery, wet, granular or iced.
2. On the right or left slope of deep, powdery, wet, granular and iced snow in an inclination range of 0 to 30 degrees, the cart climbed obliquely across the slope stably at a speed of 4 km/hour, by inclining both skis 3 to the right or left to apply the right or left edging.
3. In the same conditions as in 2, depending on the right or left slope, when the right or left edging of the right or left ski 3 was applied, the cart climbed stably while turning right or left at a speed of 3 km/hour.
4. Without installing the skis 3, when the cart climbed a wet snow slope of 10 degrees along the slope direction, it tumbled at the advance of a distance of 1 meter.

As understood from the above explanation, according to the first embodiment of the invention, since the load applied to the cart main body is supported by the belts as well as the skis longer than the cart main body, the ground (snow) contact area of the belts can be reduced, and accordingly the cart main body can be reduced in size, and the cart can climb a steep slope safely without tumbling.

In the embodiment of the invention, since the skis and the cart main body can be separated from each other, it is convenient for transportation.

In the embodiment of the invention, since the degree of contact of the skis with the snow surface may be freely adjusted depending on the stiffness of the snow, it is possible to travel smoothly regardless of the snow quality.

In the invention, since the skis can be steered by the feet of the driver to travel freely on the snow, the steering rudder handle and the mechanism for coupling them used in the prior art are not necessary, and the cart length may be shortened for these parts, and the size and weight may be further reduced, and it is possible to manufacture at low cost.

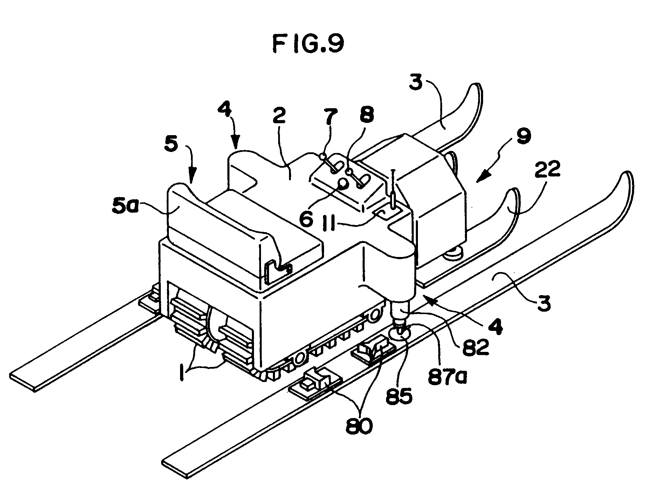

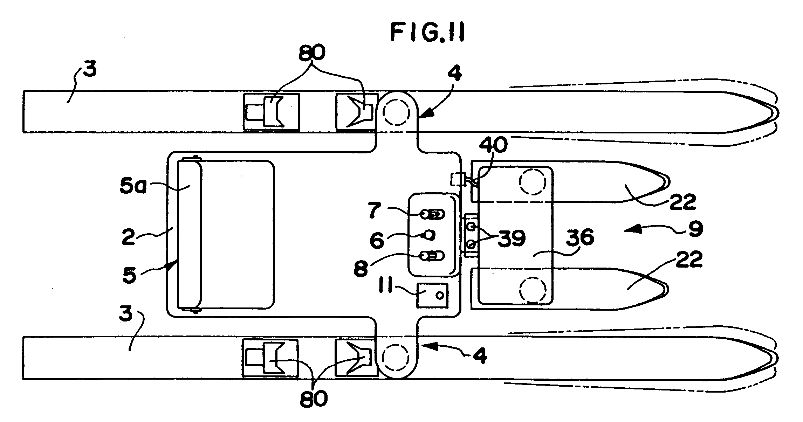

Figs. 9 to 12 indicate a snow cart in other embodiment of the invention, which comprises a cart main body 2 having belts 1 for traveling on snow, a pair of skis 3, 3 disposed at both sides of the cart main body 2 and steered by the feet of the driver (skier) riding on the cart main body 2, and a control device 9 attached to the front part of the cart main body 2, wherein the skis 3 are attached to ski fixture 4 disposed at both sides of the cart main body 2.

The cart main body 2 is driven on the snow at a desired speed (for example, a low speed of 4 km/hour) by the belts 1 operated by a prime mover (not shown) built inside, and a driver's seat 5 with a foldable back rest 5a is installed in the upper rear part, and a prime mover start switch 6, an accelerator lever 8 and a brake lever 7 are provided in the operation unit the upper front part, and a radio receiver 11 for remote control of four channels is installed at the side of the operation unit. As the prime mover, for example, a commercial gasoline engine of a maximum shaft torque of 0.38 kgm and a weight of 8.5 kg is used, and the output rotation speed is reduced by gears. Or an electric motor may be used.

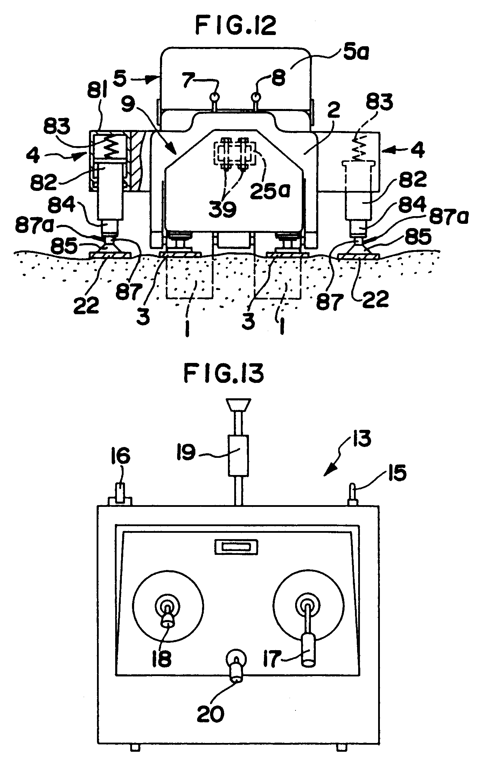

Fig. 13 shows a remote control device 13 for remote-controlling the cart main body 2, which comprises a starter remote switch 15 for starting up a starter (self-starting motor) 14 (see Fig. 19), a brake remote button 16 for manipulating the brake lever 7, an accelerator remote control stick 17 for manipulating the accelerator lever 8, a rudder remote control stick 18 for manipulating the control device 9, a transmission antenna for sending the command signals by the manipulation of the starter remote switch 15, brake remote button 16, accelerator remote control stick 17 and rudder remote control stick 18 to the radio receiver 11, and a transmitter power switch 20.

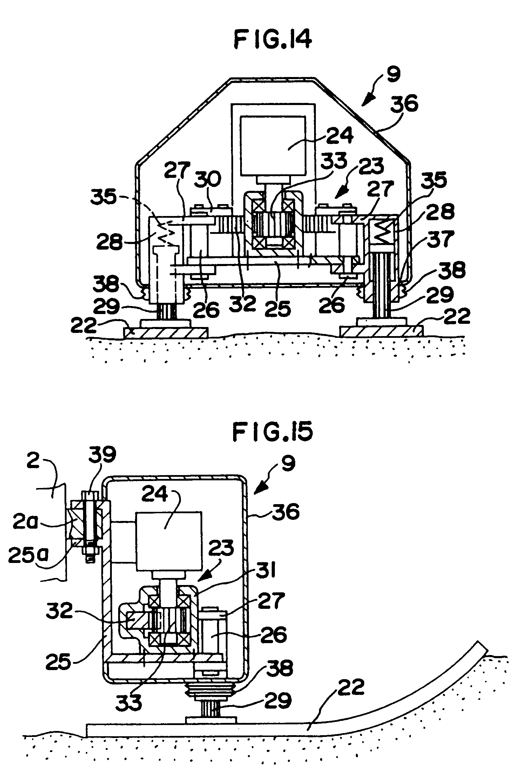

The control device 9 comprises, as shown in Figs. 14 to 16, a pair of ski-shaped rudders 22, 22 contacting with the snow surface, and a servo motor for rudder 24 for operating both rudders 22 through a steering device 23.

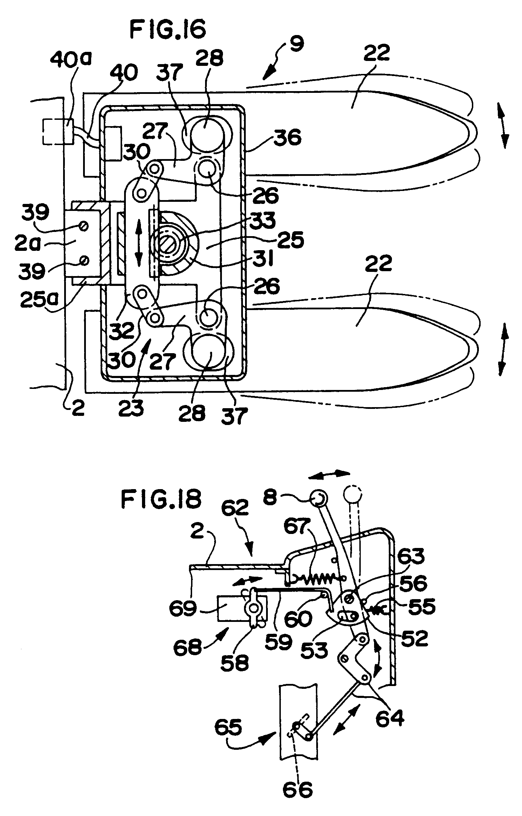

The steering device 23 is nearly the same structure as the steering device for an ordinary automobile, in which a pair of knuckle arms 27, 27 are pivoted to both ends of the horizontal part of a frame 25 with an approximately L-shaped longitudinal section through king pins 26, the lower end of a lift rod 29 spline-fitted to a cylinder 28 affixed at one end of each knuckle arm 29 is affixed to the upper middle part of each rudder 22, and the other ends of the both knuckle arms 27 are integrally coupled together by a rack 32 in a gear box 31 through a tie rod 30, and a pinion 33 to be engaged with the rack 32 is fitted to a motor shaft of the servo motor for rudder. By operating the servo motor 24 either in normal or reverse direction, the direction of the rudder 22 can be changed about the king pin 26 as indicated by virtual line in Fig. 16.

In Fig. 14, numeral 35 indicates a spring loaded in the cylinder 28 for always thrusting downward the lift rod 29, and 36 indicates an outer casing of the control device 9, and a snow preventive bellows 38 is disposed over its cylinder insertion hole 37 to prevent snow from invading the casing 36.

Besides, as shown in Fig. 15 and Fig. 16, a coupling frame 25a integrally formed at the upper end of the vertical part of the frame 25 is fitted over a coupling protrusion 2a projecting from the front end of the cart main body 2, and the protrusion 2a and the coupling frame 25a are integrally joined by bolt and nut 39. When carrying this snow cart, the coupling bolt and nut 39 is released, and the coupling frame 25a is detached from the protrusion 2a, so that the control device 9 and the cart main body 2 may be carried separately. Meanwhile, in Fig. 16, numeral 40 indicates a power cord for the servo motor for rudder 24. By inserting its front end plug 40a into the socket in the front side of the cart main body 2, the servo motor 24 is connected to a power source 41 (see Fig. 19) such as storage battery in the cart main body 2.

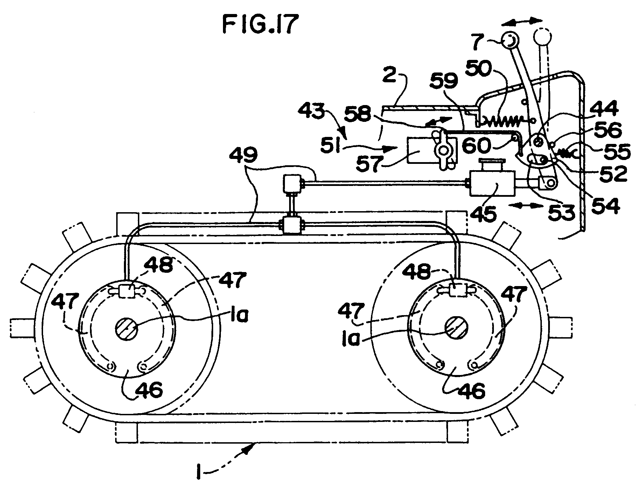

Fig. 17 shows a brake device 43 built in the cart main body 2, in which the lower end part of the brake lever 10 pivotably to and fro about a fulcrum 44 is coupled to a piston rod of a master cylinder 45, a pair of brake shoes 47, 47 are disposed opposite to the inside of a brake drum 46 mounted on an axle 1a of the belt 1, and a wheel cylinder 48 for moving the brake shoes 47 onto or off the brake drum 46 is connected to the master cylinder 45 by means of hydraulic piping 49. When the brake lever 47 is pushed forward to raise as indicated by virtual line in Fig. 17 against the act of a spring 50 from the brake inactive state shown by solid line in Fig. 17, the pressure oil in the master cylinder 45 is fed into the wheel cylinder 48 to push the brake shoe 47 to the brake drum 46, thereby applying a brake force to the belts 1, and these points are nearly same as in the brake device of an ordinary automobile.

Numeral 51 indicates a brake remote control mechanism, in which a sector-shaped engaging plate 52 is pivoted on the fulcrum 44, and an arc-shaped slot 53 formed therein is passed by an engaging pin 54 projecting from the brake lever 10. Numeral 55 indicates a tension spring for pulling the engaging plate 52 in the brake inactive direction, and 56 a stopper pin for holding the engaging plate 52 in the brake inactive position against the act of the spring 55, with the intention to prevent the engaging plate 52 from engaging with the brake lever 7 when the brake lever 7 is pushed and raised to apply the brake as mentioned above. Numeral 57 indicates a servo motor for brake, and a wire rope 59 has one end attached to a rotary lever 58 affixed on the motor shaft and has the other end coupled to the side edge of the engaging plate 52 through a sheave 60. When the servo motor for brake 57 is actuated from the brake inactive state shown by solid line in Fig. 17, the engaging plate 52 begins to rotate clockwise through the rotary lever 58 and wire rope 59, and the brake lever 7 is pushed and raised by the engaging plate 52 through the engaging pin 54, thereby applying the brake. Instead of the brake drum 46, meanwhile, a disc brake may be also used.

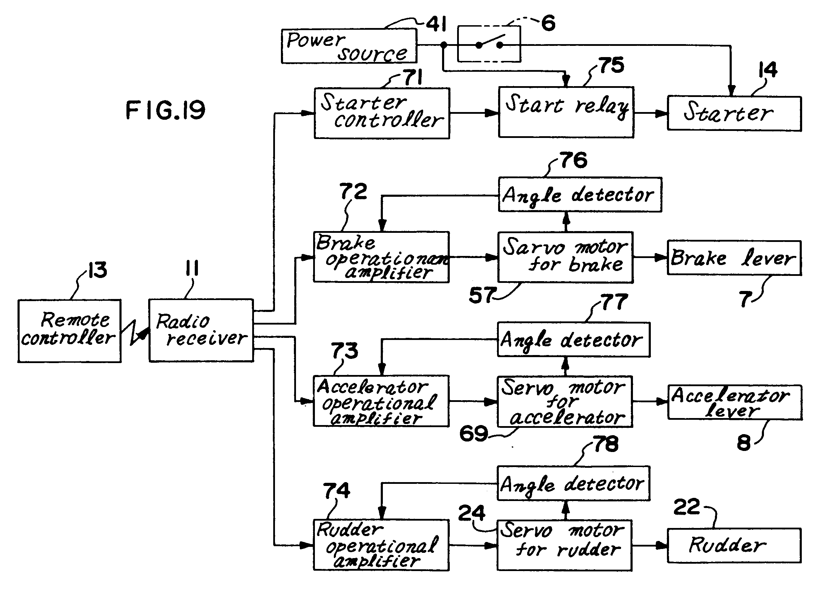

Fig. 18 shows an accelerator device 62 built in the cart main body 2, in which the lower end part of the accelerator lever 8 pivotable to and fro about 1 fulcrum 63 is coupled to a throttle valve 66 of a carburetor 65 through a link mechanism 64. When the accelerator lever 8 is pushed forward to raise as indicated by the virtual line in Fig. 18 against the act of a spring 67 from the state indicated by solid line in Fig. 18, the throttle valve 66 is turned in the releasing direction through the link mechanism 64, and the fuel feed into the prime mover increases, and these points are nearly the same as in the accelerator of an ordinary automobile.

Numeral 68 denotes an accelerator remote control mechanism, which is nearly the same structure as the brake remote control device 51, and thus corresponding parts are identified with same reference numbers, and their explanations are omitted.

According to this accelerator remote control mechanism 68, when the servo motor for accelerator 69 is actuated from the state indicated by solid line in Fig. 18, the accelerator lever 8 is pushed forward and raised, and the throttle valve 66 is turned in the releasing direction.

Fig. 19 is a block diagram explaining the principle of operation by radio remote control, in which the command signal from the remote controller 13 is received from the radio receiver 11 and is selectively fed into a starter controller 71, a brake operational amplifier 72, an accelerator operational amplifier 73, or a rudder operational amplifier 74. By this command signal, the starter controller 71 actuates a start relay (start switch for prime mover) 75 to feed power to the starter 14 from the power source 41, while the brake, accelerator and rudder operational amplifiers 72 to 74 respectively manipulate the servo motors 57, 69, 24, and the detection signals from the angle detectors 76 to 78 for detecting the rotational angles of the servo motors 57, 69, 24 are compared with the command signal, and when both signals coincide, the operation of the servo motors 57, 69, 24 is stopped. By thus controlling the servo motors 57, 69, 24, the cart main body 2 may be steered as desired.

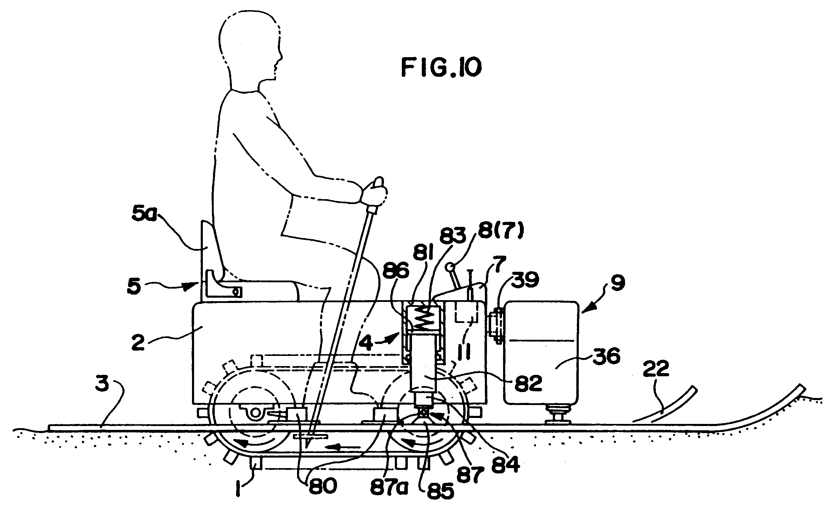

In Figs. 9 to 12, the skis 3 are longer than the cart main body 2 in the running direction (for example, about 1.8 m), and commercial Alpine skis or Nordic skis may be used, and straps 80 for fastening the ski boots of the driver are disposed nearly in the middle. In the ski fixture 4, as shown in Fig. 10 and Fig. 12, lift rods 82 are telescopically inserted into cylinders 81 affixed at both sides of the cart main body 2, and the lift rods 82 area always thrust downward by a spring 83 loaded in the cylinder 81, while suckers 85 for sucking the top of the skis 3 are provided at the lower side of the lift rod 82 through a flexible joint 84, and a locking protrusion 86 is projecting from the upper end of the lift rod. In order that the front parts of the skis 3 may not sink into the snow even in the case of a steep slope of over 10 degrees or in a deep snow, it is desired to incline the ski fixture 4 slightly so that the skis 3 at forward part can incline upward by about 10 degrees.

In this constitution, when the driver rides on the cart main body 2, the spring 83 and the spring 35 of the control device 9 are properly compressed by the load of the cart main body 2 and the body weight of the driver, and the load applied to the cart main body 2 is supported by the belt 1 as well as the skis 3 and the rudders 22, so that the ground (snow) contact area of the belts 1 can be reduced, and the size of the cart main body 2 can be reduced. Besides, in deep or soft snow, the cart main body 2 will not sink excessively into the snow, and can travel smoothly. During traveling, moreover, by the repulsive force of the compressed springs 83, 35 enables the skis 3 and the rudders 22 to securely follow up the changes of the snow surface, and the snow encroaching amount of the belts 1 can be reduced.

Besides, since the skis 3 are tiltably supported by the flexible joint, the skis 3 can be tilted longitudinally or laterally or rotated horizontally, and the skis 3 can be freely steered by the feet of the driver depending on the slope state of the snow surface.

As the flexible joint 84, a ball joint or other coupling may be used, but it is desired to use an elastic material such as rubber. Accordingly, the inclined skis 3 may be promptly returned to the neutral position by the characteristic tensile reaction of the elastic material.

The suckers 85 are furnished with known manual suction devices 87. When the lever 87a of the suction device 87 are pulled up after abutting the upper surface of the skis against the suckers 85, the inside of the suckers 85 is set in a reduced pressure state, and the suckers 85 attract and hold the skis 3. Reversely, only by pulling down the lever 87a, the suction of the sucker 85 is released, so that the skis 3 may be easily detached.

Explaining the steering method of the snow cart, as shown in Fig. 10, the driver wearing the skis 3 on feet sits on the seat 5, attaches the skis 3 to the ski fixture 4, turns on the start switch 6, and manipulates the accelerator lever 8 and brake lever 7. Then the snow cart runs on the snow, and while traveling, the driver can freely steer the skis 3 by the feet owing to the flexible joint 84 to run not only a flat snow surface, but also a steep slope of about 30 degrees securely up and down, regardless of whether the snow is deep, powdery, wet, granular or iced. In this case, the rudder 22 is maintained along the lengthwise direction of the cart main body 2, and in order to keep this state more securely, it is desired to use a locking device for locking the rudder 22 or steering device 23.

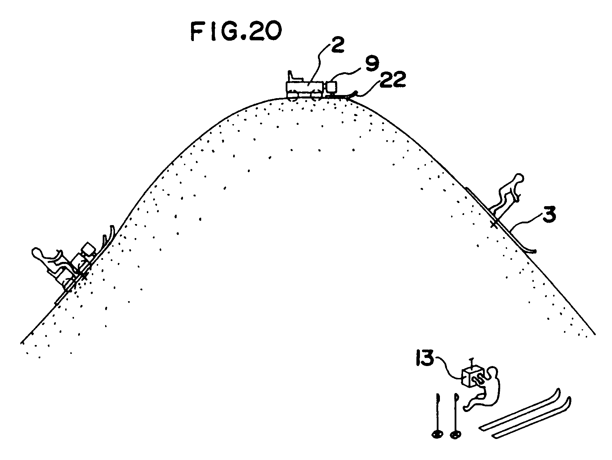

For example, as shown in Fig. 20, after climbing the snow-clad mountain by the snow cart, the skis 3 are detached from the cart main body 2, and the driver descends on the skis 3, and then a command signal is transmitted from the foot of the mountain by manipulating the remote controller 13. As a result, according to the command signal, the starter 14, brake remote control mechanism 51, accelerator remote control mechanism 68 and control device 9 are radio remote-controlled, and the cart main body 2 left over on the top of the mountain is returned to a desired point.

As understood from the above description according to the second embodiment of the invention, not only the snow cart can be freely driven on the snow by operation of manned travel while the driver rides on the cart main body, but also the cart main body can be returned by operation of unmanned travel under remote control if the driver descends, after climbing to the top of the mountain, by using the skis attached to both sides of the cart main body. This returning work can be done quickly and easily.

Further in operation of unmanned travel as mentioned above, properly manipulating the brake by remote control ensures that the cart main body can be safely returned.

Further since the control device to be remote-controlled by radio is installed at the front side of the cart main body, the running direction of the unmanned cart main body is properly controlled so that the cart main body can be returned securely to the desired point.

Further the cart main body and control device can be separated so as to be conveyed easily.

## Claims

1. A snow cart which comprises a main body (1) equipped with endless traction belts (2) for traveling on snow, ski holding means (4) provided on both sides of the main body, and a pair of skis (3) attached to the ski holding means (4) and positioned in contact with snow in a running direction and having a length greater than the main body (1),
**characterized** in that
the ski holding means (4) is adapted to hold the ski (3) displaceably in a vertical direction relative to the main body and tiltably in longitudinal and lateral directions relative to the main body so that a person riding on the main body can drive the snow cart stably over snow while steering the skis (3) by motion of his feet.

2. A snow cart as set forth in claim 1, wherein the ski holding means (4) is adapted to hold the ski (3) detachably.

3. A snow cart as set forth in claim 1, wherein the main body (1) of the snow cart is equipped at least with an engine for driving the belts (2), a starting switch (6) associated with the engine, an accelerator device (62) for controlling the speed of the engine, an actuating motor (69) linked with the accelerator device (62), and a radio receiver (11) for remote control of the starting switch (6) for the engine and the actuating motor (69) for the accelerator device (62).

4. A snow cart as set forth in claim 3, wherein the main body (1) of the snow cart is equipped with a brake device (43) and an actuating motor (57) linked with the brake device (43), which can be operated under remote control through said radio receiver (11).

5. A snow cart as set forth in claim 4, wherein the main body (1) of the snow cart is equipped at a front part thereof with a steering device (9) comprising a guide board (22) and an actuating motor (24) associating with the guide board. which can be operated under remote control through said radio receiver (11).

6. A snow cart as set forth in claim 5, wherein said steering device (9) is adapted to be detachable from the main body (1) of the snow cart.

## Patentansprüche

1. Ein Schneefahrzeug, welches einen mit endlosen Traktionsriemen (2) zum Fahren auf Schnee ausgestatteten Hauptkörper (1), eine an beiden Seiten des Hauptkörpers vorgesehene Skihalteeinrichtung (4) und ein Paar von an der Skihalteeinrichtung (4) befestigte und in einer Fortbewegungsrichtung im Kontakt mit dem Schnee positionierte Skier (3) umfaßt, die eine Länge größer als die des Hauptkörpers (1) besitzen,
**dadurch gekennzeichnet**, **daß**
die Skihalteeinrichtung (4) dazu ausgelegt ist, die Skier (3) in einer vertikalen Richtung relativ zu dem Hauptkörper verschiebbar und in Längs- und Querrichtungen relativ zu dem Hauptkörper kippbar zu halten, so daß eine auf dem Hauptkörper fahrende Person das Schneefahrzeug stabil über den Schnee fahren kann, während sie die Skier (3) mittels Bewegung ihrer Füße steuert.

2. Ein Schneefahrzeug nach Anspruch 1, wobei die Skier 3 durch die Skihalteeinrichtung (4) lösbar gehalten sind.

3. Ein Schneefahrzeug nach Anspruch 1, worin der Hauptkörper (1) des Schneefahrzeuges ausgestattet ist mit mindestens einen Motor zum Antreiben der Riemen (2), einem mit dem Motor verbundenen Anlaßschalter (6), einer Beschleunigungseinrichtung (62) zum Kontrollieren der Geschwindigkeit des Motors, einem mit der Beschleunigungseinrichtung (62) verbundenen Stellmotor (69), und einem Empfänger zum Fernbedienen des Anlaßschalters für den Motor und den Stellmotor (69) für die Beschleunigungseinrichtung (62).

4. Ein Schneefahrzeug nach Anspruch 3, worin der Hauptkörper (1) des Schneefahrzeuges mit einer Bremseinrichtung (43) und einem mit der Bremseinrichtung (43) verbundenen Stellmotor (57) verbunden ist, der unter Fernbedienung durch den Empfänger (11) zu betätigen ist.

5. Ein Schneefahrzeug nach Anspruch 4, worin der Hauptkörper (1) des Schneefahrzeuges an einem Frontteil mit einer Steuereinrichtung (9) ausgestattet ist, die ein Führungsbrett (22) und einen mit dem Führungsbrett verbundenen Stellmotor (24) umfaßt, der unter Fernbedienung durch den Empfänger (11) zu betätigen ist.

6. Ein Schneefahrzeug nach Anspruch 5, worin die Steuereinrichtung (9) von dem Hauptkörper (1) des Schneefahrzeuges lösbar ausgebildet ist.

## Revendications

1. Véhicule pour déplacement sur neige qui comprend une caisse principale (1) équipée de chenilles de traction sans fin (2) pour déplacement sur la neige, un moyen de maintien de ski (4) prévu sur les deux côtés de la caisse principale, et une paire de skis (3) fixés au moyen de maintien de ski (4) et placés en contact avec la neige dans le sens du déplacement, et ayant une longueur supérieure à celle de la caisse principale (1), caractérisé en ce que :
le moyen de maintien de ski (4) est destiné à maintenir le ski (3) de façon déplaçable dans une direction verticale par rapport à la caisse principale et inclinable dans les directions longitudinale et latérale par rapport à la caisse principale de façon qu'une personne chevauchant la caisse principale puisse conduire le véhicule d'une manière stable sur la neige, tout en dirigeant les skis (3) par le mouvement de ses pieds.

2. Véhicule se déplaçant sur neige selon la revendication 1, dans lequel le moyen de maintien de ski (4) est destiné à maintenir le ski (3) de façon amovible.

3. Véhicule se déplaçant sur neige selon la revendication 1, dans lequel la caisse principale (1) du véhicule est équipée d'au moins un moteur pour entraîner les chenilles (2), d'un commutateur de démarrage (6) associé au moteur, d'un dispositif à accélérateur (62) pour commander la vitesse du moteur, d'un moteur d'actionnement (69) relié au dispositif à accélérateur (62) et d'un récepteur de radio (11) pour télécommander le commutateur de démarrage (6) pour le moteur et le moteur d'actionnement (69) pour le dispositif à accélérateur (62).

4. Véhicule se déplaçant sur neige selon la revendication 3, dans lequel la caisse principale (1) du véhicule est équipée d'un dispositif de freinage (43) et d'un moteur d'actionnement (57) lié au dispositif de freinage (43), qui peut être actionné par télécommande par l'intermédiaire dudit récepteur radio (11).

5. Véhicule selon la revendication 4, dans lequel la caisse principale (1) du véhicule est équipée à sa partie avant d'un dispositif de direction (9) comprenant un panneau de guidage (22) et un moteur d'actionnement (24) associé au panneau de guidage, qui peut être actionné sous télécommande par l'intermédiaire dudit récepteur radio (11).

6. Véhicule selon la revendication 5, dans lequel ledit dispositif de direction (9) est prévu pour être détachable de la caisse principale (1) du véhicule.
